# EUROPÄISCHE PATENTSCHRIFT

(11) **EP 2 856 287 B1**
(45) Veröffentlichungstag und Bekanntmachung des Hinweises auf die Patenterteilung: **18.09.2019**
(21) Anmeldenummer: 13724164.2
(22) Anmeldetag: 04.05.2013
(51) Int. Cl.: G06F 3/039, G06F 3/041, G06F 3/044, G06F 3/0354, A45D 40/20, B43K 19/00, B43K 19/02, B43K 19/14, B43K 19/16, B43K 19/18, B43K 23/016, B43K 29/00, B43K 29/02, B43K 29/18, B43L 19/00, B43K 7/00

(54) **EINGABEGERÄT FÜR BERÜHRUNGSEMPFINDLICHE, KAPAZITIVE DISPLAYS**
INPUT DEVICE FOR TOUCH-SENSITIVE, CAPACITIVE DISPLAYS
APPAREIL DE SAISIE POUR AFFICHEURS CAPACITIFS TACTILES

(30) Priorität: 29.05.2012 DE 102012010965
(43) Veröffentlichungstag der Anmeldung: 08.04.2015
(73) Patentinhaber: STAEDTLER Mars GmbH & Co. KG, 90427 Nürnberg (DE)
(72) Erfinder: DIX, Rilke, 96047 Bamberg (DE)
(86) Internationale Anmeldenummer: PCT/EP2013/001318
(87) Internationale Veröffentlichungsnummer: WO 2013/178316

(56) Entgegenhaltungen:
- EP-A1- 1 585 016
- WO-A2-2011/008533
- CH-A5- 696 636
- Andy Hebert: "iPenzl 2-in-1 Stylus/Writer Video", , 13 November 2011 (2011-11-13), XP054975997, Retrieved from the Internet: URL:https://www.youtube.com/watch?v=gP4hKv pvjtw [retrieved on 2015-07-29]

## Beschreibung

Die Erfindung betrifft einen Eingabestift für sogenannte kapazitive, berührungsempfindliche Displays, nach dem Oberbegriff des Anspruch 1, sowie deren Verwendung.

Eingabegeräte für derartige Displays sind prinzipiell bekannt.

So sind beispielsweise Eingabegriffel bekannt, welche aus einem elektrisch leitfähigen Schaft bestehen, wobei an einem Ende ein weicher, leitfähiger, elastisch ausgebildeter Kontaktstopfen für das Display bzw. Oberfläche des Displays ausgebildet ist.
Nachteilig ist es bei derartigen Eingabestiften, dass sie als reiner Eingabestift zu teuer sind und zudem keine Schreib- oder Auftragsfunktion erfüllen.

Weiter gibt es Eingabestifte, welche an einem Ende ein Schreiborgan oder Applikator und auf der anderen Seite eine elektrisch leitfähige Anordnung in Form eines Kontaktstopfens aufweisen, welcher bei Berührung des kapazitiven Displays eine Eingabefunktion ermöglicht bzw. auslöst.
Die bekannten und oben aufgeführten Eingabestifte weisen jedoch eine Vielzahl von Nachteilen auf.
So sind derartige Stifte teuer in der Herstellung. Nahezu alle diese Eingabestifte nach dem Stand der Technik liegen als Kugelschreiber vor, wodurch der Benutzer in seiner Auswahl sehr eingeschränkt ist.

**Aufgabe** der Erfindung ist es daher, ein Eingabegerät zu schaffen, das die eingangs genannten Nachteile nicht aufweist und vielmehr sehr günstig herstellbar ist.
Weiter ist es Aufgabe der Erfindung, dass das Eingabegerät, ein dem Benutzer weiterhin in gewohnter Art und Weise als vollwertiges Schreib-, Zeichen-, Mal- oder Kosmetikgerät zur Verfügung steht.

Diese Aufgabe wird mit den Merkmalen gemäß Anspruch 1 und Anspruch 11 gelöst.

Das erfindungsgemäße Eingabegerät liegt als ein einfaches, spitzbares Schreib-, Zeichen-, Mal-, Kosmetik- oder Radiergerät vor, wobei das spitzfähig ausgebildete Gerät mindestens aus einer zur Erstellung von Abstrichen erzeugenden Mine besteht.

Bei den damit umfassten Geräten kann es sich beispielsweise um einen Vollminenstift oder eine mit einer Umhüllung aus Holz, Kunststoff und/oder Holzersatz (WPC) ummantelte Mine handeln. Die Mine kann hierbei als Blei-, Farb-, Kosmetik- oder Radiermine vorliegen.
Weiter ist es unerheblich, ob der Vollminenstift oder die ummantelte Mine zusätzlich eine Beschichtung oder alternative Dekorationsoberschicht, beispielsweise in Form einer Folie aufweist.

Es hat sich in überraschender Weise gezeigt, dass ein derartig einfach aufgebautes und kostengünstiges Gerät als ein Eingabegerät herangezogen werden kann, wenn das Minenmaterial und/oder die Minenumhüllung und/oder die Beschichtung des spitzbaren Gerätes leitfähig ausgestaltet ist bzw. sind, indem der Mine, der Minenummantelung und/oder Beschichtung leitfähige Bestandteile oder Additive zugesetzt sind.

Unter spitzbaren Geräten - wie vorstehend beschrieben - sind Geräte umfasst, welche vom Benutzer mit einem handelsüblichen Spitzer, Handspitzer oder sonstigen Anspitzvorrichtung zur Erhaltung ihrer Gebrauchsfähigkeit an- bzw. nachgespitzt werden können.

Bei Geräten deren Mine mit Holzersatz ummantelt ist, kann der Holzersatz als Kunststoff oder sog. WPC (Wood Plastic Compounds) vorliegen. Derartige Geräte bzw. Umhüllungen werden im Verfahren der Extrusion bzw. Coextrusion oder Spritzguss hergestellt.

Auch kann das Gerät eine nicht farbabgebenende Mine aufweisen. Die Mine kann beispielweise als eine Radiermine vorliegen, welche ebenfalls als ein Vollminenradierstift oder Mine/Strang mit Umhüllung als sogenannter Radierstift vorliegen kann. Auch in diesem Falle ist das Radiermaterial und/oder Umhüllung mit Stoffen/Additiven -wie bereits aufgeführt- versetzt, wodurch das Radiermaterial leitfähige Eigenschaften aufweist.

Wie ausgeführt, müssen Mine und/oder Minenumhüllung und/oder Beschichtung leitfähig ausgestaltet sein, wie dies nachfolgend beispielhaft ausgeführt ist.

Es ist Stand der Technik, wonach nahezu jeder Standardkunststoff oder kunststoffhaltige Werkstoff durch den Zusatz bestimmter Additive leitfähig gemacht werden kann. Diese Additive weisen für sich eine elektrische Leitfähigkeit auf.
Für derartige Additive seien beispielhaft Graphit, Kohlefaser, Leitruß, Metallfasern, "carbon nano tubes", Kupferpigmente, versilberte Kupferpigmente und/oder Silberpulver genannt.
Um die Mine, die Umhüllung, die Beschichtung und/oder die Elemente leitfähig zu machen, können deren Materialien auch sogenannte Antistatika zugesetzt sein. Durch Antistatika wird die statische Aufladung von Gegenständen verhindert bzw. abgeschwächt. Es gilt hierbei interne und externe Antistatika z unterscheiden. Derartige Antistatika können zum Beispiel als Metalldrähte intern eingearbeitet oder als Metallpulver extern aufgedampft werden.

Beispiel für eine **leitfähige Umhüllung** ist leitfähiger Holzersatz, vorliegend als ein WPC, welches aus dem Stand der Technik DE 102008034013 A1 bekannt ist, der durch den Zusatz von 5 bis 50 Gew. % vorzugsweise mindestens 10 bis 40 Gew. % Graphitpulver leitfähig gemacht werden.
Der Holzersatzwerkstoff gemäß dem Stand der Technik setzt sich aus folgenden Bestandteilen zusammen:

| | |
|---|---|
| 15 - 30 Gew.-% | mindestens eines polymeren Bindemittels, |
| 50 - 80 Gew.-% | mindestens eines organischen Füllstoffs, |
| 0 - 20 Gew.-% | mindestens eines anorganischen Füllstoffs, |
| 0,5 - 5 Gew.-% | mindestens eines Haftvermittlers, |
| 1 - 30 Gew.-% | mindestens eines Wachses, |
| 0 - 10 Gew. % | mindestens eines Farbpigments und |
| 0 - 10 Gew.% | mindestens eines anorganischen Additivs |

Ein konkretes Ausführungsbeispiel für den Holzersatz auf Basis von Polyolefin setzt sich wie folgt zusammen.

| | |
|---|---|
| 60 Gew. % | Holzmehl |
| 12 Gew. % | Graphit |
| 4 Gew. % | Wachs (Amidwachs) |
| 2 Gew. % | anorganisches Additive (Stearinsäure) |
| 21 Gew. % | Polyolefin |
| 1 Gew. % | Haftvermittler (Polypropylen gepfropft mit Maleinsäureanhydrid) |

Es hat sich hierbei als überraschend angenehm herausgestellt, dass durch den Zusatz des Leitfähigkeitsadditivs die Spitzfähigkeit mit handelsüblichen Spitzvorrichtungen nicht eingeschränkt wird. Ein so genanntes Spitzmoment von kleiner als 10 Ncm bleibt erhalten.
Alle gewohnten Eigenschaften von bekannten sogenannten holzgefassten Stiften bleiben ohne Einschränkungen erhalten.

Wird als Umhüllungsmaterial nicht WPC sondern **reiner Kunststoff** eingesetzt, so muss auch dem Kunststoff ein Leitfähigkeitsadditiv zugesetzt werden. Standardkunststoffe haben einen elektrischen Durchgangswiderstand von ca. 10¹⁴ Ohm. Durch den Zusatz von Additiven zur Erreichung der Leitfähigkeit lässt sich dieser Wert auf bis zu 10² Ohm senken.

Als Beispiel für einen leitfähigen Kunststoff sei das Handelsprodukt GraviTech GRV PP-030-10 Black FD der Fa. POLYONE genannt.

Die **Minen** können als Blei-, Farb-, Radier-, und Kosmetikminen oder Kreiden ausgebildet sein.

Eine leitfähige **Bleimine,** wie dem Fachmann aus dem Stand der Technik bekannt, kann wie folgt ausgebildet sein:

| | |
|---|---|
| Graphit | 50 Gew. % |
| Ton | 40 Gew. % |
| Additive | 1 Gew. % |
| Imprägnierung | 9 Gew. % |

Beispielhaft soll noch eine **polymergebundene Graphitmine** angeführt werden, wie diese beispielsweise in einem handelsüblichen Vollminenstift eingesetzt wird.

| | |
|---|---|
| Graphit | 70 Gew.% |
| Polymer (PS) | 20 Gew.% |
| Additive | 1 Gew.% |
| Wachs | 9 Gew.% |

Als Beispiel für eine leitfähige blaue **Farbmine** sei folgende Zusammensetzung genannt. Versilberte Kupferpigmente sind hier das Leitfähigkeitsadditiv.

| | |
|---|---|
| 1,5 Gew.% | Pigment Blue |
| 39 Gew.% | Bornitrid |
| 16 Gew.% | versilberte Kupferpigmente |
| 5 Gew.% | Calciumstearat |
| 7 Gew.% | Stearinsäure |
| 5 Gew.% | Carboxyamethylcellulose |
| 8 Gew.% | Glimmer |
| 16,5 Gew.% | Speckstein |

Um konventionelle **Radierminen oder Radiertipps** leitfähig auszugestalten, können diesen beispielsweise Graphit zugesetzt werden.
Eine Rahmenrezeptur für eine leitfähige Radiermasse sei beispielhaft genannt.

| | |
|---|---|
| Polymer | 15 bis 90 Gew.% |
| Anorganische Füllstoffe | 0 bis 80 Gew.% |
| Öle (z.B. Weißöl) | 0 bis 10 Gew.% |
| Graphit | 10 bis 50 Gew.% |

Die Polymere können hierbei aus SEBS, SBS, EPDM/PP oder Mischungen daraus und/oder mit Polyolefinen, Acrylaten oder PUR vorliegen.
Klassische Füllstoffe sind Kreide, Talkum und/oder Kaolin.

Als Beispiel für eine leitfähige **Kosmetikmine** sei eine Eyeliner Mine angeführt, welche sich aus

| | |
|---|---|
| 8 Gew.% | Lithiumstearat |
| 20 Gew.% | Isopropylmyristat |
| 11 Gew.% | Hydrogenated Palmkerneglycerides |
| 45 Gew.% | Pigment Blau |
| 0,5 Gew.% | Pantenol |
| 0,5 Gew.% | Propylparaben |
| 15 Gew. % | Silberpulver |

zusammensetzt.
Bei dieser Rezeptur handelt es sich um eine abgewandelte Rezeptur gemäß der DE 202005021251 U1**,** welche durch den Zusatz/Einarbeitung von Silberpulver leitfähig gemacht wurde.

Unter **Beschichtungen** werden nachfolgend dünne Farb-/Lackschichten oder dünne Folienbeschichtungen verstanden, die im Wesentlichen zu Dekorationszwecken bzw. der Oberflächenversiegelung dienen.

Ein Beispiel für eine leitfähige **Lackbeschichtung** weist folgend Bestandteile auf.

| | |
|---|---|
| Nitrozellulose | 18 Gew. % |
| Weichmacher | 6 Gew. % |
| Harze | 6 Gew. % |
| Acrylat | 6 Gew. % |
| Graphit | 12 Gew. % |
| Anorg. Füllstoffe | 20 Gew. % |
| Organ. Additive | 0,5 Gew. % |
| Lösemittel (VOC) | Rest auf 100 Gew. % |

Auch **Folienbeschichtungen** können Leitfähigkeit besitzen bzw. aufweisen. Beispielhaft sei hier das Produkt "Alufin" der Fa. Kurz genannt. Es handelt sich hier um eine Aluminium-metallisierte Prägefolie.

An dem der Schreibspitze gegenüberliegenden Ende ist ein Element, ein Kontaktierungselement für den Tablet-PC oder Display ausgebildet, wobei das Element aus einem leitfähigen Material aufgebaut ist, und wobei zwischen dem Element und der leitfähigen Mine, der leitfähigen Umhüllung und/oder der leitfähigen Beschichtung ein elektrisch leitfähiger Kontakt/Verbindung ausgebildet ist.

Zwischen dem Element und der Mine, der Umhüllung und/oder der Beschichtung kann alternativ ein Dielektrikum ausgebildet sein.

Das Element kann lösbar oder unlösbar mit dem Stift verbunden sein.
Im Falle der lösbaren Verbindung kann das Kontaktierungselement bei abgespitztem Stift auf einem anderen Stift eingesetzt werden, was für den Benutzer einen weiteren Kostenvorteil nach sich zieht.
Auch ist es von Vorteil, falls ein Kontaktierungselement durch häufigen oder zweckentfremdeten Gebrauch defekt ist, wenn dieses gegen ein neues Element ausgetauscht werden kann, und nicht der ganze Stift ausgetauscht werden muss. Ein Beispiel für eine lösbare Verbindung ist eine Steckverbindung, in der der Innendurchmesser der Halterung des Kontaktierungselementes kleiner bzw. geringfügig kleiner ausgestaltet ist als der Außendurchmesser des Stiftendes, um im aufgesteckten Zustand sicheren Sitz bzw. Halt zu gewährleisten.
Das Kontaktierungselement besteht, wie aus dem Stand der Technik bekannt, häufig aus einem gummiartig, elastisch und/oder schaumartig aufgebauten Material, welchem Additive zur Erreichung der Leitfähigkeit zugesetzt sind.
Es hat sich gezeigt, dass auch ein sogenannter Radiertipp, wie aus dem Stand der Technik hinreichend bekannt, leitfähig ausgestaltet werden kann und als Element dienen kann. In dieser Ausführungsform übernimmt der Radiertipp gleichzeitig neben seiner Funktion des Radierens von Abstrichen gleichzeitig eine
Kontaktierungsfunktion für das Display des Tablets.
Radiertipps nach dem Stand der Technik sind häufig in Metallhülsen gefasst, wobei die Hülsen am Ende des Stiftes unlösbar durch Verkrimpung befestigt sind.

Es hat sich zudem in überraschender Weise gezeigt, dass zwischen der leitfähig ausgestalteten Mine, Umhüllung und/oder Beschichtung sowie der Hand des Benutzers keine direkte Kontaktierung bzw. unmittelbarer leitfähiger Übergang bestehen muss. Es kann durchaus eine Leitungsunterbrechung in Form eines Dielektrikums ausgebildet sein, wodurch eine Art Kondensatorelement ausgebildet ist, welches eine genügend große Ladungsverschiebung bei Kontaktierung des Display des Benutzers mit dem Eingabegerät erzeugt, um am Tablet eine Eingabefunktion auszulösen.

Beispielhaft sein hierzu eine Eingabegerät genannt, bei welchen Mine und Umhüllung leitfähig sind, aber die dünne Lackschicht nicht. Die Eingabefunktion ist uneingeschränkt gegeben.

Gleiches gilt auch bezüglich der Verbindung zwischen Kontaktierungselement und leitfähiger Mine, Umhüllung und/oder Beschichtung, wo eine Leitungsunterbrechung durch einen dünnen Spalt bzw. Abstand die Funktion des Eingabegerätes nicht beeinträchtigt ist. Aufgrund des dadurch ausgebildeten Dielektrikums kommt es zu einer Ladungsverschiebung, welche ausreicht um eine Eingabefunktion auszulösen.

Die Erfindung soll nachfolgend anhand der **Figuren 1 bis 3** weiter erläutert werden.
**Fig. 1****:** Eingabegerät bestehend aus einer Mine mit adaptiertem Kontaktierungselement;
**Fig. 2****:** Eingabegerät bestehend aus einer Mine, einer Minenumhüllung und einem Radiertipp;
**Fig. 3****:** Eingabegerät, bestehend aus einer Mine mit einer Minenumhüllung sowie einer Beschichtung;

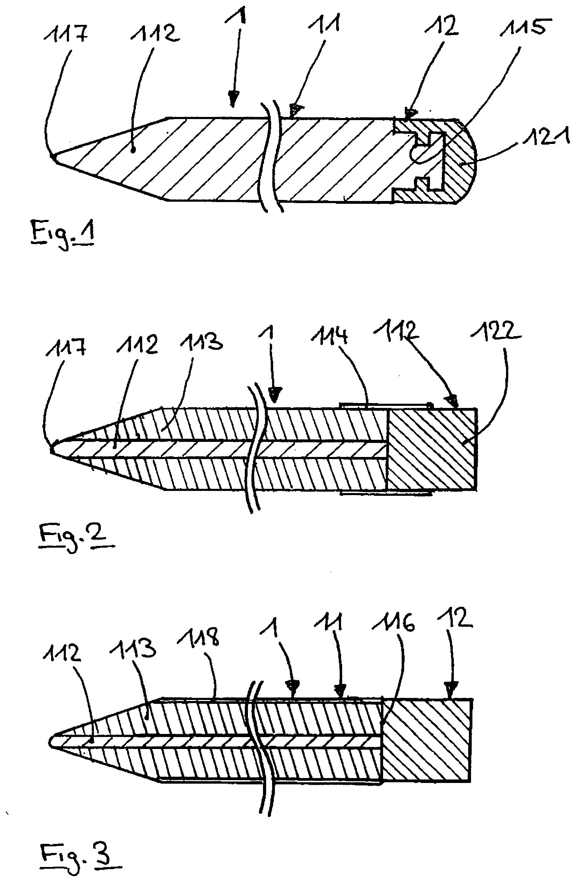

**Fig. 1** zeigt ein Eingabegerät 1, welcher als ein Vollminenstift 11 ausgebildet ist. Die Mine 112 erstreckt sich in dieser Ausführung über den gesamten Querschnitt des Stiftes 11. Am der Schreibspitze 117 gegenüberliegenden Ende des Gerätes 1 ist ein Kontaktierungselement 12 angeordnet. Das Kontaktierungselement 12 ist über eine hinterschnittige Verbindung/Ansatz 115 gehalten. In dieser Ausführungsform sind die Mine 112 als auch das Kontaktierungselement 12, vorliegend als Schaum-/Gummikörper bzw. als gummielastischer Körper 121, elektrisch leitfähig ausgebildet. Im nicht dargestellten Anwendungsfall bringt der Benutzer das Eingabegerät mit der Oberfläche des Tablets in Berührung und stellt damit eine elektrisch leitfähige Verbindung zwischen dem Tablet und der Hand des Benutzers her. Diese Kontaktierung führt zu einer Ladungsverschiebung, wodurch eine Eingabefunktion auf dem Tablet bzw. Tablet-PC ausgelöst wird.
Durch den Einsatz eines Kontaktierungselementes 121 wird die Oberfläche der Tablets geschont, beispielsweise einem Verkratzen vorgebeugt. Aber auch die Kontaktfläche zwischen dem Element 121 und dem Tablet wird vergrößert, da sich das Element aufgrund seiner Flexibilität an das Tablett anlegt.

Zudem ist aufgrund der Dämpfungseigenschaften des Elementes 121 das Eingabegeräusch reduziert und die auf die Oberfläche des Displays einwirkende Kraft/Flächeneinheit reduziert wird.

**Fig. 2** zeigt und beschreibt eine alternative Ausgestaltung eines Eingabestiftes 1, welcher eine Mine 112 mit einer Umhüllung 113 aufweist. Auf der der Schreibspitze 117 gegenüberliegenden Ende ist ein Kontaktierungselement 12 in Form eines Radiertipp 122 ausgebildet, wobei der Radiertipp 122 eine elektrische Leitfähigkeit aufweist. Gehalten wird der Radiertipp 122, wie hinreichend aus dem Stand der Technik bekannt, über eine Metallhülse 114, die an der Umhüllung 113 verschiebesicher gehaltert ist und gleichzeitig den Radiertipp sicher hält. Radiertipp 122, Umhüllung 113 und/oder Minen 112 stehen in leitfähigem Kontakt. In dieser Ausführung sind sowohl Mine 112 als auch Umhüllung 113 leitfähig ausgestaltet.

In der **Fig. 3** wird ein Eingabegerät 1 gezeigt, welches eine Mine 112 mit einer Minenumhüllung 113 sowie einer Beschichtung 118 aufweist. In dieser dargestellten Ausführungsform sind die Umhüllung 113 und die Mine 112 elektrisch leitfähig ausgebildet. Die dünne Beschichtung 118 kann, muss aber nicht elektrisch leitfähig ausgestaltet sein. In dem Fall, dass die Beschichtung 118 nicht elektrisch leitfähig ausgebildet ist, wird im nicht dargestellten Benutzungsfall zwischen der Hand des Benutzers und dem Eingabegerät 1 ein Kondensator/Dielektrikum ausgebildet. Da bei dünnen Beschichtungen 118 die Kapazität sehr groß ist, reicht die Ladungsverschiebung bei Kontaktierung des Tablets aus, um eine Eingabefunktion zu erreichen bzw. auszulösen.
Das Eingabegerät 1 gemäß Figur 3 kann ist mit einem Kontaktierungselement 12 versehen. Das Kontaktierungselement 12 ist mittels einer Klebeschicht 116 am Stift 11befestigt.

Alternativ zu einem Kontaktierungselement kann das Eingabegerät auf der der Schreibspitze gegenüber liegenden Ende mit einem Gleitlack versehen sein, um leichtes und angenehmes Gleiten auf der Oberfläche des Tablets zu erreichen. Auch in diesem Fall ist zu erwähnen, dass bei einer dünnen Schicht des Gleitlacks dieser nicht zwingend leitfähig ausgestaltet sein muss, aber natürlich sein kann.

Verwendung finden diese Eingabegeräte für/auf kapazitive, berührungsempfindliche Displays von sogenannten Tablet Computern bzw. Smart Phones. Das Gerät ist ein einfacher Stift, wobei der einfache Stift spitzbar ausgebildet ist, wobei das Gerät als eine Mine vorliegt, oder wobei das Gerät als eine Mine mit einer Beschichtung vorliegt, oder wobei das Gerät als eine Mine mit einer Umhüllung vorliegt, oder wobei das Gerät eine Mine, eine Umhüllung und eine Beschichtung aufweist. Die Mine, die Umhüllung und/oder die Beschichtung ist bzw. sind elektrisch leitfähig ausgebildet. An einem Ende des Gerätes ist ein Element, ein Kontaktierungselement für ein Tablet/Display ausgebildet, wobei das Kontaktierungselement als ein elektrisch leitfähiges Material vorliegt.
Die Mine, die Umhüllung, die Beschichtung und/oder die Elemente weisen leitfähige Bestandteile oder Additive auf, wobei diese Additive als Graphit, Kohlefaser, Leitruß, Metallfasern, "carbon nano tubes", Kupferpigmente, versilberte Kupferpigmente und/oder Silberpulver vorliegen.

### Positionsliste

- 1: Eingabegerät
11 einfacher Stift
112 Mine
113 Umhüllung
114 Metallhülse
115 hinterschnittiger Ansatz
116 Klebeschicht
117 Schreibspitze
118 Beschichtung
12 Kontaktierungselement
121 Schaum-/Gummikörper
122 Radiertipp

## Patentansprüche

1. **Verwendung eines Eingabegerätes** (1) für kapazitive, berührungsempfindliche Displays von sogenannten Tablet Computern bzw. Smart Phones, zur Realisierung einer Ladungsverschiebung zwischen Benutzer und Display mit dem Eingabegerät (1) zur Erzeugung einer Eingabefunktion,
**wobei** zwischen einer Hand des Benutzers und einer Mine (112) des Eingabegerätes eine Leitungsunterbrechung (118) ausgebildet ist,
**wobei** die Leitungsunterbrechung (118) in Form eines Kondensator/Dielektrikum ausgebildet ist,
**wobei** das Eingabegerät (1) ein einfacher Stift ist,
**wobei** der einfache Stift spitzbar ausgebildet ist,
**wobei** das Eingabegerät (1) als eine Mine (112) mit einer Umhüllung (113) vorliegt,
**wobei** die Mine (112) elektrisch leitfähig ausgebildet ist,
**wobei** die Mine (112) leitfähige Bestandteile oder Additive aufweist
**wobei** die leitfähigen Bestandteile oder Additive als Graphit, Kohlefaser, Leitruß, Metallfasern, "carbon nano tubes", Kupferpigmente, versilberte Kupferpigmente, Antistatika und/oder Silberpulver vorliegen,
**wobei** an einem Ende des Eingabegerätes (1), ein Kontaktierungselement (12) für ein Tablet/Display ausgebildet ist,
**wobei** das Kontaktierungselement (12) als ein elektrisch leitfähiges Material ausgebildet ist
**und wobei** zwischen dem Kontaktierungselement (12) und der Mine (112) ein elektrisch leitfähiger Kontakt ausgebildet ist.

2. **Verwendung eines Eingabegerätes** nach Anspruch 1,
**dadurch gekennzeichnet,**
**dass** die Umhüllung aus Kunststoff und/oder aus Holzersatz (WPC) ausgebildet ist.

3. **Verwendung eines Eingabegerätes** nach Anspruch 1,
**dadurch gekennzeichnet,**
**dass** die Mine als eine Blei-, eine Farb-, eine Kosmetik- oder als eine Radiermine ausgebildet ist.

4. **Verwendung eines Eingabegerätes** nach Anspruch 1,
**dadurch gekennzeichnet,**
**dass** das Kontaktierungselement lösbar mit dem Stift verbunden ausgebildet ist.

5. **Verwendung eines Eingabegerätes** nach Anspruch 1,
**dadurch gekennzeichnet,**
**dass** das Kontaktierungselement unlösbar mit dem Stift verbunden ausgebildet ist.

6. **Verwendung eines Eingabegerätes** nach mindestens einer der Ansprüche 1, 4 und 5,
**dadurch gekennzeichnet,**
**dass** das Kontaktierungselement als ein Radierer oder Radiertipp ausgebildet ist.

## Claims

1. Use of an input apparatus (1) for capacitive, touch-sensitive displays of so-called tablet computers or smartphones, for realisation of charge displacement between user and display by the input apparatus (1) for generating an input function,
wherein a conduction interruption (118) is formed between a hand of the user and an insert (112) of the input apparatus,
wherein the conduction interruption (118) is constructed in the form of a capacitor/dielectric,
wherein the input apparatus (1) is a simple pen,
wherein the simple pen is constructed so as to be able to be pointed,
wherein the input apparatus (1) is present as an insert (112) with a casing (113),
wherein the insert (112) is constructed to be electrically conductive,
wherein the insert (112) has conductive components or additives,
wherein the conductive components or additives are present as graphite, carbonfibre, carbon black, metal fibres, 'carbon nano tubes', copper pigments, silvered copper pigments, antistatics and/or silver powder,
wherein a contacting element (12) for a tablet/display is formed at one end of the input apparatus (1),
wherein the contacting element (12) is constructed as an electrically conductive material and
wherein an electrically conductive contact is formed between the contacting element (12) and the insert (112).

2. Use of an input apparatus according to claim 1, **characterised in that** the casing is constructed from plastics material and/or from wood substitute (WPC).

3. Use of an input apparatus according to claim 1, **characterised in that** the insert is construct as a lead, colouring, cosmetic or erasing insert.

4. Use of an input apparatus according to claim 1, **characterised in that** the contacting element is constructed to be detachably connected with the pen.

5. Use of an input apparatus according to claim 1, **characterised in that** the contacting element is constructed to be non-detachably connected with the pen.

6. Use of an input apparatus according to at least one of claims 1, 4 and 5, **characterised in that** the contacting element is constructed as an eraser or erasing tip.

## Revendications

1. Utilisation d'un périphérique d'entrée (1) pour écrans tactiles capacitifs d'ordinateurs tablettes ou de téléphones intelligents, pour réaliser un transfert de charge entre l'utilisateur et l'écran avec le périphérique d'entrée (1) afin de produire une fonction d'entrée,
une rupture de ligne (118) étant réalisée entre une main de l'utilisateur et une mine (112) du périphérique d'entrée,
la rupture de ligne (118) étant réalisée sous la forme d'un condensateur/diélectrique,
le périphérique d'entrée (1) étant un simple crayon,
le simple crayon étant conçu comme pouvant être taillé,
le périphérique d'entrée (1) étant présent sous la forme d'une mine (112) avec une enveloppe (113),
la mine (112) étant conçue électriquement conductrice,
la mine (112) présentant des constituants ou additifs conducteurs,
les constituants ou additifs conducteurs étant présents sous forme de graphite, de fibre de carbone, de noir de carbone conducteur, de fibres métalliques, de nanotubes de carbone, de pigments de cuivre, de pigments de cuivre argentés, d'antistatiques et/ou de poudre d'argent,
un élément de contact (12) pour une tablette/un écran étant réalisé à une extrémité du périphérique d'entrée (1),
l'élément de contact (12) étant réalisé sous la forme d'un matériau électriquement conducteur
et un contact électriquement conducteur étant réalisé entre l'élément de contact (12) et la mine (112).

2. Utilisation d'un périphérique d'entrée selon la revendication 1,
**caractérisée en ce**
**que** l'enveloppe est réalisée en matière plastique et/ou en bois composite (WPC).

3. Utilisation d'un périphérique d'entrée selon la revendication 1,
**caractérisée en ce**
**que** la mine est réalisée sous la forme d'une mine de plomb, d'une mine de couleur, d'une mine cosmétique ou d'une mine gomme.

4. Utilisation d'un périphérique d'entrée selon la revendication 1,
**caractérisée en ce**
**que** l'élément de contact est réalisé relié de manière amovible au crayon.

5. Utilisation d'un périphérique d'entrée selon la revendication 1,
**caractérisée en ce**
**que** l'élément de contact est réalisé relié de manière inamovible au crayon.

6. Utilisation d'un périphérique d'entrée selon au moins l'une des revendications 1, 4 et 5,
**caractérisée en ce**
**que** l'élément de contact est réalisé sous la forme d'une gomme ou d'un bout effaceur.
